# EUROPÄISCHE PATENTSCHRIFT

(11) **EP 2 174 125 B1**
(45) Veröffentlichungstag und Bekanntmachung des Hinweises auf die Patenterteilung: **12.03.2014**
(21) Anmeldenummer: 08801097.0
(22) Anmeldetag: 01.08.2008
(51) Int. Cl.: G01N 30/18, G01N 30/20, G01N 30/24

(54) **EINSPRITZPORT FÜR ANALYSENGERÄTE, ANORDNUNG ZUR BETÄTIGUNG EINES EINSPRITZPORTS SOWIE ANALYSENGERÄT MIT EINEM EINSPRITZPORT**
INJECTION PORT FOR ANALYSIS APPLIANCES, DEVICE FOR ACTUATING AN INJECTION PORT, AND ANALYSIS APPLIANCE WITH AN INJECTION PORT
PORT D'INJECTION POUR APPAREILS D'ANALYSE, ENSEMBLE D'ACTIONNEMENT D'UN PORT D'INJECTION ET APPAREIL D'ANALYSE DOTÉ D'UN PORT D'INJECTION

(30) Priorität: 02.08.2007 DE 102007036612
(43) Veröffentlichungstag der Anmeldung: 14.04.2010
(73) Patentinhaber: DIMATEC Analysentechnik GmbH, 45141 Essen (DE)
(72) Erfinder: MONSÉ, Christian, 44791 Bochum (DE)
(74) Vertreter: CBDL Patentanwälte
(86) Internationale Anmeldenummer: PCT/DE2008/001259
(87) Internationale Veröffentlichungsnummer: WO 2009/015656

(56) Entgegenhaltungen:
- WO-A-93/11696
- WO-A-2005/013883
- WO-A-2008/068663
- US-A- 4 022 065
- US-A- 4 403 520
- US-A- 4 422 860
- US-A- 4 896 545
- US-A- 4 915 356
- US-A1- 2002 131 902

## Beschreibung

### TECHNISCHES GEBIET DER ERFINDUNG

Die Erfindung betrifft einen Einspritzport für Analysengeräte, bei denen eine zu analysierende Probe mittels eines Probengebers in eine Analysenkammer abgegeben wird. Die Erfindung betrifft auch eine Anordnung zur Betätigung des Einspritzports sowie ein mit einem entsprechenden Einspritzport versehenes Analysengerät.

### HINTERGRUND DER ERFINDUNG

Bei Analysengeräten der hier in Frage stehenden Art wird eine zur analysierende flüssige Probe in der Regel automatisch mittels eines Probengebers aus einem die zu analysierende Probe enthaltenden Gefäß mittels einer Kanüle angesaugt und, nach entsprechender Neupositionierung des Probengebers, in die Analysenkammer, bei der es sich z.B. um einen Reaktor handeln kann, in dem die Probe verdampft wird, eingespritzt und anschließend analysiert.

Aus verschiedenen Gründen ist es wünschenswert, daß die Analysenkammer vor, während und nach der Analyse nur begrenzt der Umgebungsluft ausgesetzt ist. So kann z.B. gewünscht sein, daß Umgebungsluft vor der Analyse nicht in die Analysenkammer eindringen und die Messung ggf. verfälschen kann. Wird die zu analysierende Probe in der Analysenkammer verdampft, sollen die dabei entstehenden Gase möglichst vollständig entsprechenden Sensoren zugeführt werden und nicht unkontrolliert in die Umgebung entweichen. Nach der Analyse kann die Analysenkammer z.B. mit einem Inertgas gespült werden, das ebenfalls nicht unkontrolliert in die Umgebung entweichen soll. Andererseits muß die Kanüle eines Probengebers in die Analysenkammer eingeführt werden können, so daß ein Zugang für die Kanüle zur Analysenkammer benötigt wird.

Bislang wird der genannte Zugang zur Analysenkammer z.B. mittels eines Septums realisiert, wie dies z.B. in der US 4,915,356 A oder der WO 2005/013883 A1 gezeigt ist. Dabei wir das Septum einfach von der Kanüle des Probengebers durchstochen und bietet - zumindest im neuen Zustand - sowohl bei eingeführter Kanüle als auch nach dem Herausziehen der Kanüle eine hinreichende Abdichtung der Analysenkammer. Da jedoch automatische Probengeber in der Regel sehr präzise arbeiten, erfolgt das Durchstechen des Septums immer an der gleichen Stelle, was zu einer schnellen Alterung des Septums führt, das daher relativ häufig ausgetauscht werden muß. Bei automatischen Analysegeräten, die unbeaufsichtigt viele Stunden hintereinander arbeiten und theoretisch Tausende von Proben analysieren können, ohne daß es eines menschlichen Wartungseingriffes bedürfte, stellt der bislang nur manuell zu bewerkstelligende Wechsel des Septums eine merkliche Beeinträchtigung der Effizienz und einen nicht unerheblichen Kostenfaktor dar.

Die US 4,403,520 A offenbart eine Vorrichtung zu Steuerung der Injektion einer flüssigen Probe in ein Analysengerät.

Die WO 93/11696 A2 offenbart einen Verbindungsstecker, der ein Ventilelement umfaßt, durch das eine Kanüle geführt werden kann.

Die US 4,422,860 A zeigt einen Injektor für die Zuführung einer flüssigen Probe in ein Analysegerät, umfassend ein Ventil und eine Injektionsspritze.

### ZUSAMMENFASSUNG DER ERFINDUNG

Der Erfindung liegt die Aufgabe zugrunde, einen Einspritzport für Analysengeräte sowie ein mit einem entsprechenden Einspritzport versehenes Analysengerät anzugeben, bei welchem der gewünschte verschließbare Zugang für eine Kanüle eines Probengebers septumfrei realisiert und der Wartungsaufwand deutlich gemindert ist. Der Erfindung liegt auch die Aufgabe zugrunde, eine Anordnung zur Betätigung des erfindungsgemäßen Einspritzsports anzugeben, mittels welcher ein besonders sicherer und wirtschaftlicher Betrieb des Einspritzports gewährleistet werden kann.

Die Aufgabe wird gelöst von einem Einspritzport gemäß Anspruch 1, einer Anordnung gemäß Anspruch 9 sowie einem Analysengerät gemäß Anspruch 11. Vorteilhafte Ausgestaltungen und Weiterbildungen sind Gegenstand der jeweiligen Unteransprüche.

Die Erfindung hat den großen Vorteil, daß mittels eines kontrolliert öffen- und schließbaren elastischen Ventilelementes der Zugang der Kanüle zur Analysenkammer sowohl bei fehlender Kanüle als auch bei eingeführter Kanüle abgedichtet werden kann. Beim Einführen der Kanüle kann das Ventilelement so weit geöffnet werden, daß die Kanüle berührungsfrei den Einspritzport durchquert, so daß es zu keinem Abrieb kommt und das Ventilelement sehr lange Standzeiten aufweisen kann.

Weitere Einzelheiten und Vorteile der Erfindung ergeben sich aus der nachfolgenden Beschreibung eines Ausführungsbeispiels in Verbindung mit der Zeichnung.

### KURZE BESCHREIBUNG DER ZEICHNUNGEN

- Fig. 1: zeigt in stark schematisierter Seitenschnittansicht einen erfindungsgemäßen Einspritzport.
- Fig. 2: zeigt den Einspritzport gemäß Fig. 1 in schematisierter Draufsicht, ohne O-Ring und Schlauchadapter.
- Fig. 3: zeigt schematisch eine Anlage zum kontrollierten Öffnen und Schließen des Ventilelementes des erfindungsgemäßen Einspritzports.

### BESCHREIBUNG VON BEVORZUGTEN AUSFÜHRUNGSFORMEN

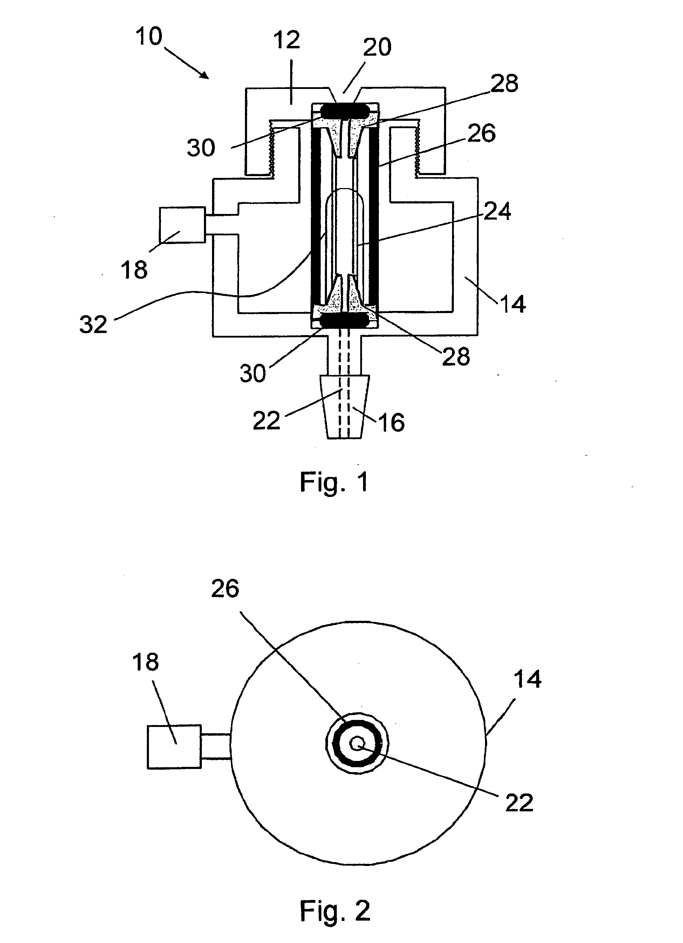

In den Fig. 1 und 2 ist ein in seiner Gesamtheit mit 10 bezeichneter Einspritzport gezeigt, der bei diesem Ausführungsbeispiel ein zweiteiliges Gehäuse mit einem Gehäuseoberteil 12 und einem Gehäuseunterteil 14 aufweist. Das Gehäuseunterteil 14 ist mit einem Anschluß in Form eines sogenannten Luerkegels 16 versehen, mittels welchem es an einer Analysenkammer eines hier nicht weiter gezeigten Analysengerätes angeschlossen werden kann.

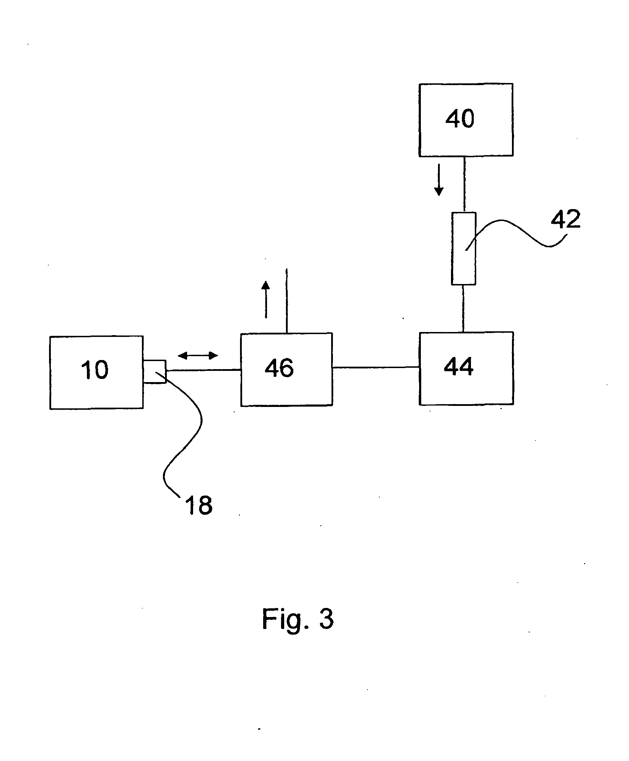

Das Gehäuseunterteil 12 weist ferner einen Anschluß 18 auf, über welchen der Einspritzport mit einer Druckquelle, insbesondere einer Druckluftquelle verbunden werden kann. Das Gehäuseinnere bildet somit eine unter Druck setzbare Kammer im Sinne des Anspruchs 4. Auf die Arbeitsweise des Einspritzportes wird im Zusammenhang mit der Beschreibung der Fig. 3 noch eingegangen.

In dem Gehäuseoberteil ist ein Einlaß in Form einer sich konisch verjüngenden und damit eine Zentrierhilfe bildenden Öffnung 20 für eine Kanüle eines hier nicht weiter gezeigten an sich bekannten Probengebers vorgesehen. Der Luerkegel 16 besitzt eine Durchgangsbohrung 22, die in einem Auslaß für die Kanüle mündet und die sich bei aufgesetztem Gehäuseoberteil 12 in Verlängerung der Öffnung 20 befindet. Bei Benutzung des Einspritzportes kann damit eine Kanüle eines Probengebers über die Einführöffnung 20 durch den Einspritzport 10 geführt werden.

Das Gehäuseoberteil 12 ist bei diesem Ausführungsbeispiel gasdicht auf das Gehäuseunterteil 14 aufgeschraubt, wozu bei diesem Ausführungsbeispiel ein Abschnitt des Gehäuseunterteils 14 mit einem Außengewinde und ein Abschnitt des Gehäuseoberteils 12 mit einem dazu komplementären Innengewinde versehen sind. Selbstverständlich sind auch andere Befestigungsarten zwischen den Gehäuseteilen möglich, z.B. eine Flanschverbindung. Die gezeigte Schraubverbindung von Gehäuseoberteil 12 und Gehäuseunterteil 14 hat jedoch den großen Vorteil, einerseits kostengünstig und ohne weitere Verbindungsteile realisierbar, andererseits leicht lösbar zu sein, so daß durch Abschrauben des Gehäuseoberteils 12 der Zugriff auf die im Gehäuse angeordneten Teile des Einspritzportes möglich wird.

Im Gehäuse ist zwischen dem Einlaß 20 und dem Luerkegel 16 ein elastisches Ventilelement, hier in Form eines Schlauchstücks 24, mittels eines Stützrohrs 26, zweier an den beiden offenen Enden des Stützrohrs 26 vorgesehener Schlauchadapter 28 und zweier zwischen den Schlauchadaptern 28 und dem Gehäuse vorgesehener O-Ringe 30 derart angeordnet, daß das Schlauchstück 24 in seiner Längsrichtung von einer durch die Öffnung 20 zum Luerkegel 16 geführten Kanüle eines Probengebers durchquert werden kann. Dabei sei darauf hingewiesen, daß es sich bei Fig. 2 um eine stark schematisierte Draufsicht handelt, in der die Begrenzungslinien des Oberteils 12, der obere O-Ring 30 und der obere Schlauchadapter 28 nicht gezeigt sind.

In dem Stützrohr 26 ist wenigstens eine durch die Linie 32 angedeutete Ausnehmung derart vorgesehen, daß das Schlauchstück 24 den in dem Gehäuse herrschenden Druckverhältnissen unmittelbar ausgesetzt ist. Die Schlauchadapter 28 und die O-Ringe 30 dichten zusammen mit dem Schlauchstück 24 das Gehäuseinnere gegenüber der Gehäuseaußenseite ab, so daß z.B. ein Gas oder ein Fluid, das über den Anschluß 18 in das Gehäuseinnere geleitet wird, nicht über die Öffnung 20 oder die Bohrung 22 entweichen kann. Diese Ausgestaltung ermöglicht es, das Schlauchstück 24 durch Erhöhen des Innendrucks in dem Gehäuse derart zusammenzuquetschen, daß der über den Einspritzport gebildete Zugang zu einer hier nicht gezeigten Analysenkammer eines Analysengerätes derart verschlossen ist, daß weder Umgebungsluft in die Analysenkammer eindringen, noch z.B. bei einer Analyse entstehende Gase aus der Analysenkammer über den Einspritzport hinausdringen können. Dabei kann der Zugang sowohl bei fehlender als auch bei durch den Einspritzport geführter Kanüle eines Probengebers verschlossen werden, wobei im letzteren Falle der Schlauch dicht an der Kanülenaußenseite anliegt und die Analysenkammer natürlich über die Kanüle mit dem Probengeber verbunden ist, der jedoch in der Regel selbst so ausgebildet ist, daß über ihn keine Gase aus der Analysenkammer unkontrolliert entweichen können.

Der Innendurchmesser des Schlauchstücks 24 ist vorteilhaft so bemessen, daß er etwas größer ist als der Außendurchmesser einer üblicherweise verwendeten Kanüle. Dies erlaubt es dann, die Kanüle berührungslos durch das Schlauchstück hindurchzuführen, wenn dieses nicht mit Druck beaufschlagt ist. Es ergibt sich damit kein Abrieb, was die Standzeiten des Schlauchstücks erheblich verlängert. Daß bei dieser Ausgestaltung die Analysenkammer während des Einführens der Kanüle kurzzeitig nicht gasdicht durch den Einspritzport verschlossen ist, schadet bei den meisten Anwendungsfällen nicht. Ist tatsächlich ein gasdichter Verschluß auch beim Einführen der Kanüle gewünscht, kann der Druck im Gehäuseinneren so vermindert werden, daß das Schlauchstück an der Kanüle auch beim Einführen anliegt, sich jedoch keine zu hohen Reibungskräfte zwischen Kanüle und Schlauchstück ergeben.

In der Fig. 3 ist schematisch eine mögliche Anordnung zur Betätigung des Einspritzportes 10, genauer gesagt, eines in dem Einspritzport vorgesehenen Ventilelementes gezeigt. Die Anordnung umfaßt eine Druckquelle, hier in Form eines Drucklufttanks 40, der über einen Durchflußbegrenzer, hier in Form einer Kapillare 42, einen Puffertank 44 und ein 3/2-Wegeventil 46 mit dem Anschluß 18 des Einspritzportes 10 verbunden ist. Über das 3/2-Wegeventil und eine entsprechende, an sich bekannte Steuerung kann das in dem Einspritzport 10 vorgesehene elastische Ventilelement, also z.B. das in der Fig. 1 gezeigte Schlauchstück derart mit Druck beaufschlagt oder entlastet werden, daß das Ventilelement öffnet oder schließt. Da zum Schließen des Ventilelementes kein übermäßiger Druck benötigt wird, kann die Versorgung über den Puffertank 44 erfolgen, was es zusammen mit dem Durchflußbegrenzer 42 erlaubt, die Anordnung gegen einen übermäßigen Druckluftverbrauch bei z.B. defektem elastischem Ventilelement im Einspritzport abzusichern. Der Puffertank, der bei den Dimensionen des Einspritzportes für übliche Analysengeräte etwa ein Volumen von 100 ml besitzt, wird über den Durchflußbegrenzer nur mit einem stark begrenzten Volumenstrom nachgefüllt. Damit kann sichergestellt werden, daß z.B. bei defektem Ventilelement im Einspritzport eine Luftmenge von maximal nur etwa 30 l pro Stunde entweicht.

Im Rahmen des Erfindungsgedankens sind zahlreiche Abwandlungen und Weiterbildungen möglich, die sich z.B. auf die Art des verwendeten Ventilelementes beziehen. So ist es z.B. möglich, anstelle des gezeigten Schlauchstücks, das durch äußeren Druck in der gewünschten Weise zusammengequetscht wird, ein elastisches doppelwandiges Rohrelement zu verwenden, das derart aufgeblasen oder mit einem Fluid befüllt wird, daß sich dessen Innendurchmesser in der gewünschten Weise verringert, um so den Zugang mit oder ohne Kanüle zu einer dem Einspritzport nachgeordneten Analysenkammer zu verschließen. Auch ist es möglich, das Schlauchstück anstelle des gezeigten offenen Stützrohres z.B. in ein U-Profil einzuspannen. Für den Fachmann ist ferner klar, daß sich der gewünschte Effekt des Öffnens und Schließens des elastischen Ventilelementes auch ergibt, wenn das Ventilelement anstatt mit Druckluft oder einem anderen Gas mit einem Fluid beaufschlagt wird. In den meisten Fällen steht jedoch an einem Analysengerät der hier in Frage stehenden Art auch eine Druckluftquelle bereit, so daß diese vorteilhaft zur Betätigung des Ventilelementes des Einspritzsportes verwendet werden kann.

## Patentansprüche

1. Einspritzport (10) für Analysengeräte,
wobei der Einspritzport (10) im bestimmungsgemäßen Montagezustand an einem Analysengerät einen Zugang zu einer Analysenkammer des Analysengerätes bildet, durch den eine Kanüle eines Probengebers mit einer zu analysierenden Probe geführt werden kann, und
wobei der Einspritzport (10) wenigstens ein kontrolliert öffen- und schließbares elastisches Ventilelement umfasst, mittels welchem der Zugang zur Analysenkammer sowohl bei fehlender Kanüle als auch bei durch den Einspritzport (10) geführter Kanüle abgedichtet werden kann,
**dadurch gekennzeichnet,**
**dass** das steuerbare elastische Ventilelement hydraulisch oder pneumatisch betätigbar ist.

2. Einspritzport (10) nach Anspruch 1, **dadurch gekennzeichnet, dass** das Ventilelement ein doppelwandiges Rohrelement ist, durch das die Kanüle eines Probengebers geführt werden kann und dessen Innendurchmesser durch Einfüllen eines Gases oder eines Fluids verringerbar ist.

3. Einspritzport (10) nach Anspruch 1, **dadurch gekennzeichnet, dass** das Ventilelement ein Schlauchstück (24) ist, durch das eine Kanüle eines Probengebers geführt werden kann, wobei das Schlauchstück (24) in einer in dem Einspritzport (10) vorgesehenen mittels eines Fluids oder eines Gases unter Druck setzbaren Kammer so angeordnet ist, dass die Innenseite des Schlauchstücks (24) im bestimmungsgemäßen Montagezustand einen Zugang für eine Kanüle eines Probengebers bildet, wobei durch Unterdrucksetzen der Kammer bei fehlender Kanüle der Zugang zur Analysenkammer durch Zusammenpressen des Schlauchstücks (24) verschlossen werden kann und bei eingeführter Kanüle das Schlauchstück (24) dicht an die Kanüle gepresst werden kann.

4. Einspritzport (10) nach Anspruch 3, **dadurch gekennzeichnet, dass** das Schlauchstück (24) in ein offenes Stützrohr (26) oder ein U-Profil gespannt ist.

5. Einspritzport (10) nach einem der Ansprüche 1 bis 4, **dadurch gekennzeichnet, dass** der Einspritzport (10) ein Gehäuse mit einem Einlass (20) und einem Auslass (22) für eine Kanüle eines Probengebers aufweist.

6. Einspritzport (10) nach Anspruch 5, **dadurch gekennzeichnet, dass** das Gehäuse (12, 14) zweiteilig ausgebildet ist, wobei ein Teil des Gehäuses abgenommen werden kann, ohne den gesamten Einspritzport (10) von einem Analysegerät abzunehmen, um Zugang zu dem elastischen Ventilelement zu gewähren.

7. Einspritzport (10) nach Anspruch 5 oder 6, **dadurch gekennzeichnet, dass** in dem Gehäuse ein Gas- oder Fluideinlass (18) vorgesehen ist, um das Ventilelement zu betätigen.

8. Einspritzport (10) nach einem der Ansprüche 5 bis 7, **dadurch gekennzeichnet, dass** das Ventilelement zwischen dem Einlass (20) und dem Auslass (22) für eine Kanüle eines Probengebers in dem Gehäuse angeordnet ist, wobei zwischen dem Ventilelement und dem Einlass (20) und zwischen dem Ventilelement und dem Auslass (22) jeweils ein O-Ring (30) angeordnet ist.

9. Anordnung zur Betätigung eines Einspritzportes (10) nach einem der Ansprüche 1 bis 4,
wobei das Ventilelement über ein 3/2-Wegeventil (46) mit einer Druckquelle (40) zur Beaufschlagung des Ventilelementes mit einem unter Druck stehenden Fluid oder Gas verbunden ist,
wobei zwischen die Druckquelle (40) und das 3/2-Wegeventil (46) ein Durchflussbegrenzer (42) und
wobei zwischen den Durchflussbegrenzer (42) und das 3/2-Wegeventil (46) ein Puffertank (44) für unter Druck stehendes Fluid oder Gas geschaltet sind.

10. Anordnung nach Anspruch 9, **dadurch gekennzeichnet, dass** die Druckquelle eine Druckluftquelle (40) ist und dass der Durchflussbegrenzer eine Kapillare (42) ist.

11. Analysengerät mit einer Analysenkammer,
wobei ein Einspritzport (10) im bestimmungsgemäßen Montagezustand einen Zugang zur Analysenkammer des Analysengerätes bildet, durch den eine Kanüle eines Probengebers mit einer zu analysierenden Probe geführt werden kann, und wobei
der Einspritzport (10) wenigstens ein kontrolliert öffen- und schließbares elastisches Ventilelement umfasst, mittels welchem der Zugang zur Analysenkammer sowohl bei fehlender Kanüle als auch bei durch den Einspritzport (10) geführter Kanüle abgedichtet werden kann,
**dadurch gekennzeichnet,**
**dass** das steuerbare elastische Ventilelement hydraulisch oder pneumatisch betätigbar ist.

12. Analysengerät nach Anspruch 11, **dadurch gekennzeichnet, dass** der Einspritzport (10) wie in einem der Ansprüche 1 bis 8 angegeben ausgebildet ist.

13. Analysengerät nach Anspruch 11 oder 12, ferner umfassend eine Anordnung zur Betätigung des Einspritzportes (10) nach Anspruch 9 oder 10.

## Claims

1. An injection port (10) for analysis appliances,
wherein the injection port (10) forms, in the intended assembly state on an analysis appliance, an access to an analysis chamber of the analysis appliance, through which access a cannula of a sample feeder can be guided with a sample to be analysed, and
wherein the injection port (10) comprises at least one elastic valve element, which can be opened and closed in a controlled manner and by means of which the access to the analysis chamber can be sealed both in the case of an absent cannula and also in the case of a cannula guided through the injection port (10),
**characterised in that**
the controllable elastic valve element can be actuated hydraulically or pneumatically.

2. The injection port (10) according to claim 1, **characterised in that** the valve element is a double-walled tubular element, through which the cannula of a sample feeder can be guided and the inner diameter of which can be reduced by filling with a gas or a fluid.

3. The injection port (10) according to claim 1, **characterised in that** the valve element is a hose piece (24) through which the cannula of a sample feeder can be guided, wherein the hose piece (24) is disposed in a chamber provided in the injection port (10) and pressurisable by means of a fluid or a gas, in such a way that the inner side of the hose piece (24), when in the intended assembly state, forms an access for a cannula of a sample feeder, wherein, by pressurising the chamber, the access to the analysis chamber can be closed by constricting of the hose piece (24) in the absence of the cannula and, when a cannula is introduced, the hose piece (24) can be pressed tight against the cannula.

4. The injection port (10) according to claim 3, **characterised in that** the hose piece (24) is made taut in an open support pipe (26) or a U-profile.

5. The injection port (10) according to any one of claims 1 to 4, **characterised in that** the injection port (10) comprises a housing with an inlet (20) and an outlet (22) for a cannula of a sample feeder.

6. The injection port (10) according to claim 5, **characterised in that** the housing (12, 14) is constituted in two parts, wherein one part of the housing can be removed without removing the entire injection port (10) from an analysis appliance, in order to provide access to the elastic valve element.

7. The injection port (10) according to claim 5 or 6, **characterised in that** a gas or fluid inlet (18) is provided in the housing in order to actuate the valve element.

8. The injection port (10) according to any one of claims 5 to 7, **characterised in that** the valve element is disposed in the housing between the inlet (20) and the outlet (22) for a cannula of a sample feeder, wherein an O-ring (30) is disposed in each case between the valve element and the inlet (20) and between the valve element and the outlet (22).

9. An arrangement for actuating an injection port (10) according to any one of claims 1 to 4,
wherein the valve element is connected via a 3/2-way valve (46) to a pressure source (40) for subjecting the valve element to a pressurised fluid or gas,
wherein a flow restrictor (42) is incorporated between the pressure source (40) and the 3/2-way valve (46) and
wherein a buffer tank (44) for a pressurised fluid or gas is incorporated between the flow restrictor (42) and the 3/2-way valve (46).

10. The arrangement according to claim 9, **characterised in that** the pressure source is a compressed air source (40) and that the flow restrictor is a capillary (42).

11. An analysis appliance with an analysis chamber,
wherein an injection port (10) forms, in the intended assembly state, an access to the analysis chamber of the analysis appliance, through which access a cannula of a sample feeder can be guided with a sample to be analysed, and
wherein the injection port (10) comprises at least one elastic valve element, which can be opened and closed in a controlled manner and by means of which the access to the analysis chamber can be sealed both in the case of an absent cannula and also in the case of a cannula guided through the injection port (10),
**characterised in that**
the controllable elastic valve element can be actuated hydraulically or pneumatically.

12. The analysis appliance according to claim 11, **characterised in that** the injection port (10) is constituted as indicated in any one of claims 1 to 8.

13. The analysis appliance according to claim 11 or 12, further comprising an arrangement for actuating the injection port (10) according to claim 9 or 10.

## Revendications

1. Port d'injection (10) pour appareils d'analyse,
ledit port d'injection (10), à l'état de montage conforme sur un appareil d'analyse, formant un accès à une chambre d'analyse de l'appareil d'analyse, à travers lequel on peut faire passer une canule d'un passeur d'échantillons avec un échantillon à analyser, et
ledit port d'injection (10) comprenant au moins un élément élastique formant vanne qui est apte à être ouvert et fermé de manière contrôlée et au moyen duquel ledit accès à la chambre d'analyse peut être étanché aussi bien en cas de canule inexistante que lorsqu'une canule traverse ledit port d'injection (10),
**caractérisé par le fait**
**que** ledit élément élastique formant vanne apte à être commandé peut être actionné de façon hydraulique ou pneumatique.

2. Port d'injection (10) selon la revendication 1, **caractérisé par le fait que** ledit élément formant vanne est un élément tubulaire à double paroi à travers lequel on peut faire passer la canule d'un passeur d'échantillons et dont le diamètre intérieur peut être réduit en y versant un gaz ou un fluide.

3. Port d'injection (10) selon la revendication 1, **caractérisé par le fait que** ledit élément formant vanne est une pièce de tuyau flexible (24) à travers laquelle on peut faire passer une canule d'un passeur d'échantillons, ladite pièce de tuyau flexible (24) étant disposée à l'intérieur d'une chambre qui est prévue dans ledit port d'injection (10) et est apte à être pressurisée au moyen d'un fluide ou d'un gaz, de telle manière que, à l'état de montage conforme, la face intérieure de ladite pièce de tuyau flexible (24) forme un accès pour une canule d'un passeur d'échantillons, dans lequel, en pressurisant ladite chambre, en cas de canule inexistante, l'accès à la chambre d'analyse peut être obturé en comprimant ladite pièce de tuyau flexible (24) et, lorsque ladite canule est introduite, la pièce de tuyau flexible (24) peut être pressée de manière étanché contre la canule.

4. Port d'injection (10) selon la revendication 3, **caractérisé par le fait que** ladite pièce de tuyau flexible (24) est serrée dans un tube de soutien ouvert (26) ou un profilé en U.

5. Port d'injection (10) selon l'une quelconque des revendications 1 à 4, **caractérisé par le fait que** ledit port d'injection (10) présente un boîtier ayant une entrée (20) et une sortie (22) pour une canule d'un passeur d'échantillons.

6. Port d'injection (10) selon la revendication 5, **caractérisé par le fait que** ledit boîtier (12, 14) est réalisé en deux parties, une partie du boîtier pouvant être enlevée sans enlever l'ensemble du port d'injection (10) d'un appareil d'analyse afin de donner accès audit élément élastique formant vanne.

7. Port d'injection (10) selon la revendication 5 ou 6, **caractérisé par le fait qu'**une entrée de gaz ou de fluide (18) est prévue à l'intérieur du boîtier afin d'actionner ledit élément formant vanne.

8. Port d'injection (10) selon l'une quelconque des revendications 5 à 7, **caractérisé par le fait que** ledit élément formant vanne est disposé entre l'entrée (20) et la sortie (22) pour une canule d'un passeur d'échantillons à l'intérieur du boîtier, entre ledit élément formant vanne et ladite entrée (20) ainsi qu'entre ledit élément formant vanne et ladite sortie (22) étant disposé respectivement un joint torique (30).

9. Ensemble d'actionnement d'un port d'injection (10) selon l'une quelconque des revendications 1 à 4, dans lequel
ledit élément formant vanne est connecté via une vanne à 3/2 voies (46) à une source de pression (40) pour soumettre l'élément formant vanne à un fluide ou gaz sous pression,
entre ladite source de pression (40) et ladite vanne à 3/2 voies (46) est monté un limiteur de débit (42) et
entre ledit limiteur de débit (42) et ladite vanne à 3/2 voies (46) est monté un réservoir tampon (44) pour fluide ou gaz sous pression.

10. Ensemble selon la revendication 9, **caractérisé par le fait que** ladite source de pression est une source d'air comprimé (40) et que ledit limiteur de débit est un tube capillaire (42).

11. Appareil d'analyse comprenant une chambre d'analyse,
un port d'injection (10), à l'état de montage conforme, formant un accès à la chambre d'analyse de l'appareil d'analyse, à travers lequel on peut faire passer une canule d'un passeur d'échantillons avec un échantillon à analyser, et
ledit port d'injection (10) comprenant au moins un élément élastique formant vanne qui est apte à être ouvert et fermé de manière contrôlée et au moyen duquel ledit accès à la chambre d'analyse peut être étanché aussi bien en cas de canule inexistante que lorsqu'une canule traverse ledit port d'injection (10),
**caractérisé par le fait**
**que** ledit élément élastique formant vanne apte à être commandé peut être actionné de façon hydraulique ou pneumatique.

12. Appareil d'analyse selon la revendication 11, **caractérisé par le fait que** ledit port d'injection (10) est réalisé comme indiqué dans l'une quelconque des revendications 1 à 8.

13. Appareil d'analyse selon la revendication 11 ou 12, comprenant en outre un ensemble d'actionnement du port d'injection (10) selon la revendication 9 ou 10.
